(19) Europäisches Patentamt / European Patent Office / Office européen des brevets

(11) EP 4 581 931 A1

(12) **EUROPEAN PATENT APPLICATION**
published in accordance with Art. 153(4) EPC

(43) Date of publication:
**09.07.2025 Bulletin 2025/28**

(21) Application number: **23859341.2**

(22) Date of filing: **29.08.2023**

(51) International Patent Classification (IPC):
***A01N 43/56*** *(2006.01)* ***A01P 3/00*** *(2006.01)*

(52) Cooperative Patent Classification (CPC):
**A01N 43/36; A01N 43/54; A01N 43/56; A01N 43/653; A01N 47/24; A01N 47/38; A01P 1/00; A01P 3/00**

(86) International application number:
**PCT/CN2023/115506**

(87) International publication number:
**WO 2024/046311 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022 CN 202211043394**

(71) Applicant: **Jiangsu Flag Chemical Industry Co., Ltd.**
**Nanjing, Jiangsu 210047 (CN)**

(72) Inventors:
- **YANG, Guangfu**
  **Wuhan, Hubei 430079 (CN)**
- **WEI, Ge**
  **Wuhan, Hubei 430079 (CN)**
- **ZHANG, Pu**
  **Nanjing, Jiangsu 210047 (CN)**
- **XIONG, Zi**
  **Nanjing, Jiangsu 210047 (CN)**
- **WU, Yaojun**
  **Nanjing, Jiangsu 210047 (CN)**
- **YAO, Kaicheng**
  **Nanjing, Jiangsu 210047 (CN)**

(74) Representative: **reuteler & cie SA**
**Chemin de la Vuarpillière 29**
**1260 Nyon (CH)**

# (54) COMPOSITION USED FOR KILLING FUNGI AND METHOD FOR APPLYING COMPOSITION

(57) The present invention relates to the field of plant bactericides. Disclosed are a composition used for killing fungi and a method for applying the composition. The composition contains synergistically effective amounts of active component A and active component B, active component A being a dendrene amide compound having a structure represented by formula (I). When used as a plant bactericide, the composition used for killing fungi of the present invention has satisfactory efficacy and selectivity.

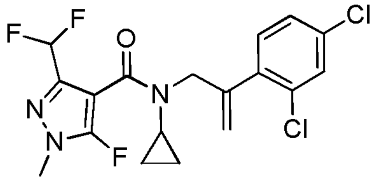

(I)

EP 4 581 931 A1

## Description

### Cross Reference to Related Applications

The application claims the benefit of Chinese patent application 202211043394.X, filed on 29/08/2022, the contents of which are incorporated herein by reference.

### Field of the Invention

The invention relates to the field of plant fungicides, in particular a fungicidal composition and method for application thereof.

### Background of the Invention

Plants are afflicted with pathogenic diseases, which affect their growth and development. Eradication of phytopathogenic fungi, in particular, constitutes a critical technical challenge urgently requiring resolution by practitioners skilled in the art.

While chemical control agents remain the most cost-effective and efficacious approach in phytopathological management, prolonged and intensive application of single-agent formulations with mono-modal mechanisms of action elevates risks of fungicidal resistance development and accelerated evolution of resistant fungal populations.

Rational combination or judicious mixing of fungicidal compounds demonstrates significant advantages including spectrum expansion, efficacy potentiation, and retardation of both tolerance onset and resistance progression in fungal populations, representing one of the most efficacious strategies to address the aforementioned phytopathological challenges.

It is known from CN113845480A that the dendrene amide compound have biological activity against phytopathogenic fungi.

However, there is still a need for the development of a new type of fungicidal composition that is highly safe, has a broad fungicidal spectrum, and is capable of producing a synergistic effect and solving the problem of resistant fungi.

### Summary of the Invention

The object of the invention is to provide a composition suitable for controlling diseases caused by phytopathogens and a method for applying the composition.

In order to achieve the above object, the first aspect of the invention provides a composition for killing fungi, which comprises a synergistically effective amount of active component A and active component B; the active component A is a dendrene amide compound with a structure shown in formula (I),

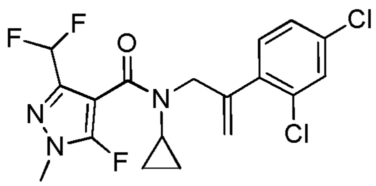

formula (I),

the active component B is selected from at least one compound of group a, group b, group c, group d, group e and group f;

the group a is an azole compound;

the group b is an amide compound;

the group c is a heterocyclic compound;

the group d is a carbamate compound;

the group e is a methoxy acrylate compound;

the group f contains at least one of guanidine compounds, nitrobenzene derivatives, organometallic compounds, sulfur-containing heterocyclic compounds, organophosphorus compounds, organochlorine compounds, inorganic active substances and antibacterial active compounds;

the antibacterial active compound is selected from at least one of validamycin, bronopol, cyflufenamid, cymoxanil, diphenylamine, metrafenone, mildiomycin, oxine-copper, prohexadione-calcium, spiroxamine, fludioxonil, tolylfluanid, ethylicin, cumic acid, cuminaldehyde, osthole, eugenol, physcion, sanguinarine chloride, carabrone and

rosmarinic acid.

The second aspect of the invention provides a method of controlling diseases on useful plants or propagation material thereof caused by phytopathogens, which comprises applying the composition described in the first aspect to the useful plants, to the locus where the useful plants are grown or to propagation material of the useful plants.

The third aspect of the invention provides a use of the composition described in the first aspect for the control of at least one of Brown spot of crops, Gray mold of crops, Anthracnose of crops, Fusarium wilt of crops and Powdery mildew of crops.

The fourth aspect of the invention provides a use of the composition described in the first aspect for the control of at least one of Sclerotinia stem rot of rape, Fusarium head blight of wheat, Bakanae disease of rice, Powdery mildew of cucurbits, Powdery mildew of mango, Leaf spot of banana, Scab of banana, Early blight of potato, Late blight of potato, Downy mildew of cucumber, Leaf spot of peanut, Bacterial angular leaf spot of cucumber, Dollar spot of turfgrass, Powdery mildew of wheat, Wheat rust, and Gray mold of cucumber.

The invention provides a fungicidal composition containing a dendrene amide compound, which has satisfactory efficiency and selectivity when being applied as a plant fungicide. Furthermore, the preparation and application methods of the composition of the invention are simple and straightforward.

**Detailed Description of the Embodiments**

The endpoints of the ranges and any values disclosed herein are not limited to the precise range or value, and these ranges or values should be understood to encompass values close to these ranges or values. For numerical ranges, each range between its endpoints and individual point values, and each individual point value can be combined with each other to give one or more new numerical ranges, and such numerical ranges should be construed as specifically disclosed herein.

As mentioned previously, the first aspect of the invention provides a composition for killing fungi, which comprises a synergistically effective amount of active component A and active component B; the active component A is a dendrene amide compound with a structure shown in formula (I),

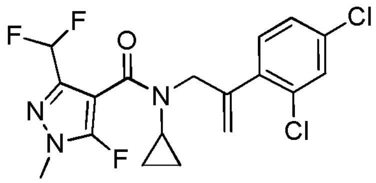

formula (I),

the active component B is selected from at least one compound of group a, group b, group c, group d, group e and group f;

the group a is an azole compound;

the group b is an amide compound;

the group c is a heterocyclic compound;

the group d is a carbamate compound;

the group e is a methoxy acrylate compound;

the group f contains at least one of guanidine compounds, nitrobenzene derivatives, organometallic compounds, sulfur-containing heterocyclic compounds, organophosphorus compounds, organochlorine compounds, inorganic active substances and antibacterial active compounds;

the antibacterial active compound is selected from at least one of validamycin, bronopol, cyflufenamid, cymoxanil, diphenylamine, metrafenone, mildiomycin, oxine-copper, prohexadione-calcium, spiroxamine, fludioxonil, tolylfluanid, ethylicin, cumic acid, cuminaldehyde, osthole, eugenol, physcion, sanguinarine chloride, carabrone and rosmarinic acid.

Preferably, the group a contains at least one compound selected from Ciproconazole, difenoconazole, azaconazole, bitertanol, bromuconazole, cyproconazole, difenoconazole, diniconazole, diniconazole-M, epoxiconazole, fenbuconazole, fluquinconazole, flusilazole, flutriafol, prochloraz, hexaconazole, imibenconazole, ipconazole, cyclopentazole(metconazole), myclobutanil, oxpoconazole, paclobutrazole, penconazole, propiconazole, prothioconazole, simeconazole, tebuconazole, tetraconazole, triadimefon, triadimenol, triticonazole, uniconazole, cyazofamid, metconazole(cyclopentanol), imazalil, pefurazoate, prochloraz, triflumizol, benomyl, carbendazim, fuberidazole, thiabendazole, ethaboxam, etridiazole, hymexazole and thiabendazole, mefentrifluconazole.

Preferably, the group b contains at least one compound selected from Benalaxyl, benalaxyl-M, benodanil, boscalid, carboxin, fenfuram, fenhexamid, flutolanil, furametpyr, mepronil, metalaxyl, metalaxyl-M, ofurace, oxadixyl, (oxycarboxin)penthiopyrad sedaxane, tecloftalamm, thifluzamide, dimethomorph, flumorph, pyrimorph, flumetover, fluopicolide, fluopyram, fluazolidinamide, zoxamide, carpropamid, dicyclomet, mandiproamid, oxytetracyclin, silthiofarm.

Preferably, the group c contains at least one compound selected from Fluazinam, pvrifenox, bupirimate, cyprodinil, diflumetorim, fenarimol, ferimzone, mepanipyrim, nitrapyrin, nuarimol, pyrimethanil, triforine, fenpiclonil, fludioxonil, dodemorph, dodemorph-acetate, fenpropimorph, tridemorph, fenpropidin, fluoroimid, iprodione, procymidone, vinclozolin, famoxadone, fenamidone, octhilinone, probenazole, acibenzolar-S-methyl, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole.

Preferably, the group d contains at least one compound selected from Ferbam, mancozeb, maneb, metam, methasulphocarb, metiram, propineb, thiram, zineb, ziram, benthiavalicarb, diethofencarb, iprovalicarb, propamocarb, Propamocarb hydrochloride.

Preferably, the group e contains at least one compound selected from azoxystrobin, pyraclostrobin, trifloxystrobin, fluoxastrobin, picoxystrobin, kresoxim-methyl, dimoxystrobin, metaminostrobin and orysastrobin.

Preferably, the group f contains at least one of guanidine compounds, cyanoacrylates, nitrobenzene derivatives, organometallic compounds, sulfur-containing heterocyclic compounds, organophosphorus compounds, organochlorine compounds, inorganic active substances and antibacterial active compounds.

Preferably, in the group f, the guanidine compounds is at least one selected from guanidine, dodine, dodine free base, iminoctadine, iminoctadine triacetate, iminoctadine acetate, iminoctadine triacetate and iminoctadine albesilate.

Preferably, the cyanoacrylates is selected from phenamacril.

Preferably, the nitrobenzene derivatives is selected from at least one of binapacryl, dinobuton, dinocap, nitrthal-isopropyl and tecnazen.

Preferably, the organometallic compounds is at least one selected from triphenyltin salt, triphenyltin acetate, triphenyltin chloride and triphenyltin hydroxide.

Preferably, the sulfur-containing heterocyclic compounds is selected from at least one of dithianon and isoprothiolane.

Preferably, the organophosphorus compounds is at least one selected from edifenphos, fosetyl, fosetyl-aluminum, iprobenfos, phosphorous acid, phosphite, pyrazophos and tolclofos-methyl.

Preferably, the organochlorine compounds is selected from at least one of chlorothalonil, cymoxanil, dichlorophen, flusulfamide, hexachlorobenzene, pencycuron, pentachlorphenole, pentachlorophenolate, phthalide, quintozene, thiophanate-methyl and tolylfluanid.

Preferably, the inorganic active substances is at least one selected from bordeaux mixture, copper acetate, copper hydroxide, copper oxychloride and basic copper sulfate.

Preferably, the antibacterial active compounds is at least one selected from validamycin, biphenyl, bronopol, cyflufenamid, cymoxanil, diphenylamine, metrafenone, mildiomycin, oxine-copper, prohexadione-calcium, spiroxamine, fludioxonil, tolylfluanid, ethylicin, cumic acid, cuminaldehyde, osthole, eugenol, physcion, sanguinarine chloride, carabrone and rosmarinic acid.

Preferably, the active component B is at least one compound selected from difenoconazole, propiconazole, azoxystrobin, kresoxim-methyl, pyraclostrobin, validamycin, metalaxyl-M, fludioxonil, prochloraz, triticonazole, triadimenol, diniconazole, cyclopentazole, myclobutanil, tebuconazole, simeconazole, picoxystrobin, pefurazoate, fenamidone, fluoxastrobin, trifloxystrobin, triflumizol, tetraconazole, mefentrifluconazole, phenamacril, thifluzamide, cyazofamid, metalaxyl, dimethomorph, flutriafol, chlorothalonil, prothioconazole, ciproconazole, fluxapyroxad and procymidone.

The inventors have found that the use of the active component B in combination with active component A enhances the effect of the latter on fungi and vice versa. Furthermore, the method of the invention is effective against a broader spectrum of fungi.

The inventors have found that a specific weight ratio of the active component A to the active component B can produce synergistic activity. A further aspect of the invention is therefore a composition, wherein the active component A and the active component B are present in the composition in amounts to produce a synergistic effect. The synergistic activity is evident in the following facts: comprising the fungicidal activity of the composition of the active component A and the active component B is greater than the sum of the fungicidal activities of the active component A and the active component.

Preferably, the content weight ratio of the active component A to the active component B is 1000: 1 to 1: 1000; preferably, the content weight ratio of the active component A to the active component B is 100: 1 to 1: 100; preferably, the content weight ratio of the active component A to the active component B is 50: 1 to 1: 50; more preferably, the content weight ratio of the active component A to the active component B is 40: 1 to 1: 40. More preferably, the content weight ratio of the active component A to the active component B is 1:25 to 25: 1; even more particularly still from 10: 1 to 1: 10, and very preferably from 5: 1 to 1: 5. Particular preference is given to from 4: 1 to 1:2, in the sample.

However, in addition to the actual synergistic effect with respect to fungicidal activity, the compositions according to the invention have further advantageous properties. Examples of such advantageous properties that can be mentioned are: more favorable degradability; improved toxicology and/or ecotoxicology behavior; or an improved characteristic of a useful plant, comprising: emergence, crop yield, more developed root system, increased tillering, increased plant height, larger leaf blade, less dead basal leaf blade, stronger tillers, greener leaf color, less fertilizer required, less seeds required, more productive tillers, earlier flowering, earlier grain maturity, less plant lodging, enhanced shoot growth, improved plant vigor, and early germination.

Some compositions according to the invention have a systemic effect (i.e., the agentia is absorbed through the plant's roots, stems, leaves, enters the plant, conducts to the top, conducts to other non-agentia -receiving parts of the plant) and can be used as fungicides on leaves, soil, and seed treatments.

The active ingredient combinations according to the invention are effective against harmful microorganisms (e.g. microorganisms) which cause phytopathogenic diseases, in particular against phytopathogenic fungi.

According to a preferred embodiment, the composition further comprises an agriculturally acceptable carrier.

The term "carrier" as used herein means an organic or inorganic, natural or synthetic substance. They facilitate the application of the active ingredient, the carrier being generally inert and must be agriculturally acceptable, in particular the plants being treated. The carrier may be a solid, such as clay, natural or synthetic silicate, silica, resin, wax, solid fertilizer, etc.; or liquids such as water, alcohols, ketones, petroleum distillates, aromatic or waxy hydrocarbons, chlorinated hydrocarbons, liquefied gases, etc.

Preferably, the carrier is at least one selected from the group consisting of clay, silicate, silica, resin, wax, solid fertilizer, water, alcohols, ketones, petroleum distillates, aromatic or waxy hydrocarbons, chlorinated hydrocarbons and liquefied gases.

As mentioned previously, the second aspect of the invention provides a method of controlling diseases on useful plants or on propagation material thereof caused by phytopathogens, which comprises applying the composition described in the first aspect to the useful plants, to the locus where the useful plants are grown or to propagation material of the useful plants.

Preferably, the useful plant is selected from at least one of grape vines, cereal crops, sugar beet crops, fruit plants, legumes, oil plants, melon plants, fiber plants, vegetables and lauraceae.

Particularly preferably, the "useful plants" typically include the following plant species: grape vines; cereals (e.g. wheat, barley, rye or oats); beets (such as beet or fodder beet); fruit (such as pome, drupe or berry, e.g. apple, pear, plum, peach, almond, cherry, strawberry, raspberry or blackberry); leguminous plants (such as broad beans, lentils, peas or soybeans); oil plants (such as rape, mustard, poppy, olives, sunflowers, coconut, castor oil plants, cocoa beans or groundnuts); melon plants (such as tender cucurbits, cucumbers or melons); fiber plants (such as cotton, flax, hemp or jute); citrus fruits (such as oranges, lemons, grapefruit, or tangerines); vegetables (such as spinach, lettuce, asparagus, cabbages, carrots, onions, tomatoes, potatoes, cucurbits or paprika); lauraceae (such as avocado, cinnamon or camphor); corn; tobacco; a nut; coffee; sugar cane; tea; a vine plant; hops; durian; bananas; a natural rubber tree; turf or ornamentals (such as flowers, shrubs, broad-leaved trees or evergreens, e.g. conifers).

Preferably, the phytopathogen is selected from at least one of ascomycetes, basidiomycetes, deuteromycetes, and oomycetes.

Preferably, the ascomycetes comprises at least one of venturia nigra, erysiphe necator, sclerotinia sclerotiorum, mycosphaerella globosa and leptospirillum.

Preferably, the basidiomycetes is selected from at least one of the genera rust, rhizoctonia, phakopsora, puccinia, smut and tilletia.

Preferably, the incomplete class (also referred to as Deuteromycetes) is selected from at least one of Botrytis, Helminthosporium, Rhynchosporium secalis, Fusarium, Septoria, Cercospora, Alternaria, Pyricularia and Pseudocercospora.

Preferably, the oomycetes is selected from at least one of phytophthora, downy mildew, pseudodowny mildew, albugo, pedunculate mold, pythium, Pseudallescheria and plasmopara.

The combination according to the invention is particularly effective for: powdery mildew; rust disease; species of leaf spot; early blight is especially against septoria, puccinia, powdery mildew, pyrenophora and Tapesia on cereals; phakopsora on soybean; rust on coffee; the genus Puccinia on Rose; alternaria on potatoes, tomatoes and cucurbits; sclerotinia on turf, vegetables, sunflower and rape; black rot, red fire, powdery mildew, gray mold and fusarium wilt disease on vines; botrytis cinerea on fruits; sclerotinia on fruit and penicillium on fruit.

Furthermore, the combinations according to the invention are particularly effective against seed-borne and soil-borne diseases, such as alternaria, ascochyta, botrytis cinerea, cercospora, ergot, cochliobolus, anthrax, epicoccum, fusarium graminearum, fusarium moniliforme, fusarium oxysporum, fusarium proliferatum, fusarium solani, fusarium collosporum, helminthosporium, microdochium nivale, phoma, pyrenophora graminea pyricularia oryzae, rhizoctonia solani, rhizoctonia cerealis, sclerotinia, septoria, sphacelotheca reiliana, tilletia caries, typhula incarnata, ustilago, ustilaginaceae, or verticillium; in particular for cereals, such as wheat, barley, rye or oats; corn; rice; cotton; soybeans;

turf; sugar beet; rape; potato; legume crops, such as peas, lentils or chickpeas; and sunflower pathogens.

In addition, the fungicidal composition is particularly suitable for controlling the following plant diseases: wheat powdery mildew, wheat rust, corn rust, cucumber powdery mildew, wheat scab, rice bakanae disease, sclerotinia rot of colza, tomato gray mold, tomato early blight, grape gray mold, wheat leaf blight, peanut leaf spot, potato late blight, barley net blotch, apple scab, wheat glume blight, corn smut, cucumber damping off, cucumber downy mildew, grape downy mildew, soybean rust, wax gourd downy mildew, wax gourd anthracnose, tomato late blight, tomato leaf mold, citrus scab, citrus anthracnose, cucumber scab, cucumber leaf blight, pepper anthracnose, pepper blight, potato black nevus, grape white rot, grape downy mildew, loofah downy mildew, wheat rust, grape powdery mildew, watermelon anthracnose, banana leaf spot, snow mold leaf blight of wheat, lawn snow rot, rice sheath blight, strawberry powdery mildew, Tomato gray leaf spot, tomato leaf mold, cucumber target disease, cucumber gray leaf spot, potato target spot, apple ring spot, apple early blight, grape spike-stalk brown rot, watermelon powdery mildew, watermelon leaf blight, banana brown spot, banana scab, banana leaf spot, and wheat take-all.

As mentioned above, the third aspect of the invention provides a use of the composition in the first aspect for the control of at least one of Brown spot of crops, Gray mold of crops, Anthracnose of crops, Fusarium wilt of crops and Powdery mildew of crops.

As described above, the fourth aspect of the invention provides a use of the composition described in the first aspect for the control of at least one of Sclerotinia stem rot of rape, Fusarium head blight of wheat, Bakanae disease of rice, Powdery mildew of cucurbits, Powdery mildew of mango, Leaf spot of banana, Scab of banana, Early blight of potato, Late blight of potato, Downy mildew of cucumber, Leaf spot of peanut, Bacterial angular leaf spot of cucumber, Dollar spot of turfgrass, Powdery mildew of wheat, Wheat rust, and Gray mold of cucumber.

According to the invention, the term "natural substances origin from plant and/or animal origin and taken from the natural life cycle" refers to plants or parts thereof harvested from the natural life cycle and in freshly harvested form. Examples of such natural substances of plant origin are stems, leaves, tubers, seeds, fruits or grains. According to the invention, the term "processed form of a natural substance of plant origin" is understood as a form of a natural substance of plant origin that improves the result of the processing. Such improved processing can be used to convert natural substances of plant origin into a more storable form of such a substance (stored goods). Examples of such improved processing are pre-drying, wetting, crushing, pulverizing, grinding, compressing or calcining. Also falling under the definition of a processed form of natural substances of plant origin are wood, whether in the form of raw wood, such as building timber, transmission towers and fences, or in the form of manufactured goods, such as furniture or objects made from wood.

According to the invention, the term "natural substances origin from plant and/or animal origin and taken from the natural life cycle" is understood as materials of animal origin, such as skins, hides, leathers, furs, hairs and the like. The combination according to the invention can prevent adverse effects such as spoilage, discoloration or mildew.

A preferred embodiment is a method for protecting natural substances of plant origin taken from natural life cycle, and/or processed forms thereof, against fungal attack, which comprises applying a synergistically effective amount of a combination of the active component A and the active component B to said natural substances of plant and/or animal origin or processed forms thereof.

Another preferred embodiment is a method of protecting fruits (preferably pomes, drupe fruits, berries and citrus fruits) taken from the natural life cycle and/or their processed forms, comprising applying a synergistically effective amount of a combination of the active component A and the active component B to said fruits and/or their processed forms.

The composition of the invention can be used in any conventional form, for example, with two packs, powder for dry seed treatment (DS), emulsion for seed treatment (ES), flowable concentrate for seed treatment (FS), solution for seed treatment (LS), water dispersible powder for seed treatment (WS), capsule suspension for seed treatment (CF), gel for seed treatment (GF), Emulsion Concentrate (EC), Suspension Concentrate (SC), Suspoemulsion (SE), Capsule Suspension (CS), water dispersible granule (WG), Emulsifiable Granule (EG), water-in-oil Emulsion (EO), oil-in-water Emulsion (EW), Microemulsion (ME), dispersible oil suspension (OD), oil suspension (OF), oil soluble liquid concentrate (OL), soluble concentrate (SL), ultra-low volume Suspension (SU), and, Ultra low volume liquid formulation (UL), parent drug (TK), Dispersible Concentrate (DC), Wettable Powder (WP) or any technically feasible formulation form in combination with an agriculturally acceptable adjuvant.

Adjuvants that may be used in the processing of the pesticide formulations of the invention include, but are not limited to: water, solvent, filler, various surfactants (emulsifier, dispersant, wetting agent, etc.), adhesive, film-forming agent, dye, antifreeze, thickener, suspending agent, disintegrating agent, antifoaming agent, penetrating agent, warning color, synergist, stabilizer, wall capsule material, pH regulator, preservative, etc. Also, in order to improve the tolerance to specific crops, a safener may be appropriately added; or adding conventional agricultural fertilizer into the mixed composition to prepare a pesticide-fertilizer mixture sometimes in order to promote the growth and development of crops. These adjuvants are all commonly used or allowed to be used in pesticide preparations, and are not particularly limited, and may be composed of one or more kinds of adjuvants.

Preferably, the surfactant may comprise an emulsifying agent, dispersant or wetting agent, which may be ionic or

non-ionic. Examples which may be mentioned are salts of polyacrylic acid, lignosulphonates, salts of phenolsulphonic or naphthalenesulphonic acids, polymers of ethylene oxide with aliphatic alcohols or with aliphatic acids or with aliphatic amines with substituted phenols(in particular alkylphenols or arylphenols), sulphosuccinates, taurine derivatives (in particular taurine esters) and phosphoric esters of alcohols or polyhydroxyethylated phenols, alkylsulphonates, alkylarylsulphonates, alkylsulfates, lauryl ether sulphates, fatty alcohol sulphates, and sulphated hexadecanols, sulphated heptadecanols and sulphated octadecanols and sulphated fatty alcohol ethylene glycol ethers, furthermore condensates of naphthalene or naphthalenesulphonic acids with phenol and formaldehyde, polyoxyethylene octylphenyl ether, ethoxylated isooctylphenol, octylphenol or nonylphenol, alkylphenyl polyglycol ethers, tributylphenyl polyglycol ether, tristearylphenyl polyglycol ether, alkyl aryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors, and also proteins, denatured proteins, polysaccharides (e.g. methylcellulose), hydrophobically modified starches, polyvinyl alcohols, polycarboxylates, polyalkoxylates, polyvinylamines, polyvinylpyrrolidone and copolymers thereof. The presence of the surfactant facilitates the dispersion of the active ingredients in water and their correct application to the plants.

Preferably, the composition may also contain various other components, such as protective colloids, binders, thickeners, thixotropic agents, penetrants, stabilizers, chelating agents, dyes, colorants, and polymers.

Preferably, the thickener is polyvinylpyrrolidone.

Preferably, the dye (also referred to as a stain) is rhodamine B.

The composition of the invention may be diluted or used directly by the user prior to use. The composition can be prepared by conventional processing methods, i.e., mixing the active substance with a liquid solvent or solid carrier, and adding one or more surfactants such as dispersant, stabilizer, wetting agent, binder, defoamer, etc.

The specific preparation of the composition is dispersible oil suspending agent, water suspending agent, suspension emulsion, wettable powder, missible oil, water dispersible granule (dry suspending agent), aqueous emulsion and microemulsion.

Particularly preferably, the specific preparation of the composition is an aqueous emulsion, a dispersible oil suspending agent, a dispersible oil agent, a microemulsion, an emulsifiable concentrate, a soluble agent, an aqueous solution, a suspending agent, a suspending emulsion, an ultra-low volume agent, a powder, a wettable powder, a granule, a water dispersible granule, a dry suspending agent, a microcapsule suspending agent, a microcapsule granule, an effervescent granule, an effervescent tablet or a water dispersible tablet. The composition of the invention can also be added with surface active substances such as an emulsifier, a dispersant, a wetting agent and the like to increase the stability, permeability and wettability of the composition.

The dispersant suitable for preparing the composition of the invention may be one or more of naphthalene or alkyl naphthalene formaldehyde condensate sulfonate, fatty alcohol ethylene oxide adduct sulfonate, alkylphenol polyoxyethylene ether sulfonate, polycarboxylate, fatty alcohol ethylene oxide adduct phosphate, alkylphenol polyoxyethylene, ether formaldehyde condensate sulfate, polyoxyethylene polyoxypropylene ether block copolymer, alkylphenol polyoxyethylene phosphate, lignosulfonate, gelatin, gum arabic, carboxymethyl cellulose, polyoxyethylene alcohol, polyvinylpyrrolidone, sodium polyacrylate, and polyethylene glycol. More preferably, the dispersant is selected from sodium naphthalene sulfonate formaldehyde condensate, carboxymethyl cellulose.

The wetting agent suitable for preparing the composition of the invention may be one or more of fatty alcohol sulfate, alkyl alcohol polyoxyethylene ether sodium sulfate, alkyl phenol polyoxyethylene, ether sodium sulfate, alkyl phenol polyoxyethylene ether formaldehyde condensate sulfate, alkyl sodium sulfate, alkyl naphthalene sulfonate, fatty alcohol ethylene oxide adduct sulfonate, alkyl phenol formaldehyde condensate ethylene oxide adduct sulfonate, alkylamido sulfonate, fatty alcohol polyoxyethylene ether, alkyl phenol polyoxyethylene ether, sorbitan fatty acid ester polyoxyethylene ethers, polyoxyethylene sorbitan fatty acid ester, poly(ethylene oxide)-poly(propylene oxide)-poly(ethylene oxide) block copolymer, and polyoxyethylene ether of alkyl phenol formaldehyde condensate. More preferably, the wetting agent is phenethylphenol polyoxyethylene ether.

The solid carriers suitable for preparing the compositions of the invention may be clay, kaolin, gypsum, bentonite, diatom, talc, pottery clay, magnesium aluminum silicate, activated clay, white carbon black, limestone, light calcium carbonate, corn starch, soluble starch, hexamethylene diammonium, benzofuran resins, styrene polymers and copolymers, and the like.

The binders suitable for preparing the germicide composition of the invention may be natural or synthetic, such as xanthan gum, gelatin, gum arabic, polyvinylpyrrolidone, magnesium aluminum silicate, polyvinyl alcohol, phenolic resin, shellac, carboxymethyl cellulose, methyl cellulose, and sodium alginate. The defoaming agent can be acetochlor, silicone, $C_{8-10}$ fatty alcohol, $C_{10-20}$ saturated fatty acid and its amide, and the like.

The defoamers suitable for preparing the compositions of the invention may be silicone emulsions, long chain alcohols, fatty acids, fatty acid salts, fluoroorganic compounds, and mixtures thereof.

The antifreeze suitable for preparing the compositions of the invention may be ethylene glycol, propylene glycol, glycerol, polyethylene glycol and the like.

The tackifiers or binders suitable for preparing the compositions of the invention may be polyvinylpyrrolidone, polyvinyl acetate, polyvinyl alcohol and cellulose ether.

The disintegrating agent suitable for preparing the composition can be one or more of calcium chloride, sodium sulfate, ammonium sulfate, polyethyl acrylate, sodium carbonate, polyvinylpyrrolidone, sodium alginate and sodium carboxymethyl starch.

The dyes suitable for preparing the compositions of the invention may be low water-soluble pigments and dyes, rhodamine, pigment Red, pigment blue, pigment yellow, pigment Green, pigment Brown, basic Violet, acid Red, basic Red.

The film-forming agent suitable for preparing the compositions of the invention can be polyvinyl alcohol, polyvinyl acetate, carboxymethyl cellulose, gum arabic, gelatin, xanthan gum, starch.

Preferably, the emulsifier is selected from fatty alcohol polyoxyethylene ether and sodium dioctyl sulfosuccinate.

Preferably, the composition further comprises a solvent, wherein the solvent is selected from at least one of cyclohexanone, xylene, ethylene glycol, ethanol, n-butanol, isobutanol, pentanol, diacetone alcohol, dimethylformamide, decanoamide, cyclohexanone, dichloroethane, dimethyl sulfoxide, butanol, octanol and isoamyl alcohol.

In short, the compositions of the invention may be mixed with solid and liquid additives conventionally used in prior formulations. The amount of the effective component used varies with the external conditions, such as temperature, humidity, the nature of the germicide used, and the like.

The invention also provides a method of controlling diseases on useful plants or on propagation material thereof caused by phytopathogens, which comprises applying the compositions as defined above to the useful plants, the locus thereof or propagation material thereof .

The method for forming the dosage forms such as wettable powder, soluble powder, missible oil, water suspending agent, dispersible oil suspending agent, aqueous emulsion, microemulsion, water dispersible granule and the like is not particularly limited, and for example, the technicians in the field can form various dosage forms provided by the invention by referring to 《Modern pesticide formulation processing technology》 (edited by Liu Guangwen, chemical industry press) and the like.

The invention will be described in detail below by way of examples.

In the following examples, the raw materials used are all ordinary commercial products unless otherwise specified.

Unless otherwise specified, the percentages in the following formulations are expressed as weight percentages.

Example 1: 24% seed treatment suspending agent (1: 2)

The formula is as follows: 8% of the active component A, 16% of the active component B prochloraz (having a purity of 97% and purchased from Shanxi Qinfeng agricultural chemical Co., Ltd.), 5% of wetting agent phenethylphenol polyoxyethylene ether, 6% of dispersant sodium naphthalene sulfonate formaldehyde condensate, 5% of antifreeze glycerol, 2% of thickener polyvinylpyrrolidone, 8% of dye rhodamine B and the water is supplemented to 100%.

The preparation method comprises the following steps: putting the active component, the wetting agent, the dispersant, the antifreeze, the thickener, the dye and water into a stirring kettle, fully stirring, pumping into a high-speed shearing machine, carrying out high-speed shearing (the rotating speed is 5000 rpm), pumping into a sand mill, fully sanding, adding the thickener after sanding is qualified, and uniformly stirring to obtain the suspended seed coating agent.

Example 2: 22% suspending agent (13: 9)

The formula is as follows: 13% of the active component A, 9% of the active component B azoxystrobin (the purity is 98% and is purchased from Jiangsu Ruibang agricultural chemical Co., Ltd.), 3% of wetting agent phenethylphenol polyoxyethylene ether, 7% of dispersant carboxymethyl cellulose, 9% of film-forming agent polyvinyl alcohol, 5% of antifreeze glycerol, 3% of thickener polyvinylpyrrolidone and the water is supplemented to 100%.

The preparation method comprises the following steps: putting the active component, the wetting agent, the dispersant, the antifreeze, the film-forming agent and water into a stirring kettle, pumping the materials into a sand mill for full grinding after full stirring, pumping the materials into a high-speed shearing machine after grinding is finished, adding the thickener performing high-speed shearing (the rotating speed is 6000 rpm), and preparing the suspending agent after shearing is finished.

Example 3: 28% microemulsion (3: 1)

The formula is as follows: 21% of the active component A, 7% of the active component B fludioxonil (the purity is 99% and is purchased from Jiangsu Changzhou August Agrochem Co., Ltd. Ltd.) the solvent cyclohexanone is 15%, the emulsifier fatty alcohol polyoxyethylene ether is 14%, the antifreeze glycerol is 5%, and the water is supplemented to

100%.

The preparation method comprises the following steps: fully dissolving the active component A and the active component B by using the solvent, adding an emulsifier and an antifreeze, uniformly mixing, finally adding deionized water, and carrying out high-speed shearing (the rotating speed is 5000 rpm), thus obtaining the microemulsion.

Example 4: 24% aqueous emulsion (1: 3)

The formula is as follows: 6% of the active component A, 18% of the active component B pyraclostrobin (having a purity of 98% and purchased from ADAMA Anpon (Jiangsu) Ltd.), 6% of fatty alcohol polyoxyethylene ether as emulsifier, 9% of xylene as solvent, 4% of cyclohexanone as solvent, 4% of dioctyl sodium maleate as emulsifier, 3% of glycerol as antifreeze, and the water is supplemented to 100%.

The preparation method comprises the following steps: fully dissolving the active component A and the active component B by using the solvent, adding an emulsifier, and fully stirring to form an oil phase; adding an antifreeze into water to dissolve to form a water phase; slowly adding the water phase into the oil phase, and shearing by using a high-speed shearing machine (the rotating speed is 5000 rpm), so as to obtain the aqueous emulsion.

Example 5: 40% Water dispersible granule (3: 5)

The formula is as follows: 15% of the active component A, 25% of the active component B difenoconazole (having a purity of 95% and obtained from Jiangsu Sevencontinent Green Chemical Co., LTD.), 9% of wetting agent phenethylphenol polyoxyethylene ether, 8% of dispersant sodium naphthalene sulfonate formaldehyde condensate, 5% of disintegrating agent sodium sulfate, 0.8% of adhesive polyethylene glycol and the balance of filler diatom to 100%.

The preparation method comprises the following steps: and uniformly mixing all the materials, crushing the materials by using a jet mill, uniformly mixing the materials again, adding water into the mixture, kneading the mixture, extruding and granulating the mixture, and drying and screening the mixture to obtain the water dispersible granule.

Test example 1:

biological examples
In-vessel bioassay example
Test subjects: wheat scab germ (*Fusarium graminearum*)
sclerotirorotium (*Sclerotinia sclerotiorum*)
The test basis is as follows: NY/T1156.2-2006 pesticide indoor bioassay Standard Fungicide part 2: test plate method for inhibiting pathogenic fungi hypha growth;
Preparing a medicament: the active component A and the active component B are prepared into required test medicaments, and 5 different concentration gradients are set for single agents and each combination. The test was repeated 3 times with a clean water control.

The test method comprises the following steps: the plate method is adopted. Cutting off the fungus cakes from the edges of the bacterial colonies by using a sterilization puncher with the diameter of 5mm under aseptic conditions, inoculating the fungus cakes to the center of a medicament-containing flat plate by using an inoculator, enabling the hypha surface to face upwards, covering a dish cover, and culturing in an incubator at proper temperature. When the colonies in the control group are full, the diameter of the colonies is measured, and the percentage of inhibition of hypha growth of each medicament treatment is calculated.

Hypha growth inhibition (%)=(diameter of blank control colony - diameter of medicament-treated colony)/(diameter of blank control colony - 5) *100

The $EC_{50}$ values (half maximal inhibitory concentration) of the single and mixed doses of component A and component (B) were determined. The obtained result is based on the co-toxicity coefficient (CTC) method of the Sun Yunpei to determine the synergistic degree, i.e. CTC $\leq$ 80 is antagonistic action, 80<CTC< 120 is additive action, 120$\leq$CTC<200 is synergistic action, and CTC$\geq$200 is significant synergistic action. The highest co-toxicity coefficient is the strongest synergistic effect. The co-toxicity coefficient was calculated according to the following formulae:

$$\text{Toxicity Index(TI)} = \text{Standard Fungicide } EC_{50} / \text{Single Agent } EC_{50} \times 100$$

$$\text{Measured Toxicity Index of Mixture (ATI)} = \text{Standard Fungicide } EC_{50} / \text{Mixture } EC_{50} \times 100$$

Theoretical Toxicity Index of Mixture (TTI) =Toxicity Index of Agent A × Content of Agent A in the Mixture (%) + Toxicity Index of Agent B × Content of Agent B in the Mixture (%)

Co-toxicity Coefficient of Mixture (CTC) = Measured Toxicity Index of Mixture / Theoretical Toxicity Index of Mixture ×100

The standard fungicide in the formula refers to the active component A.

The experiments were carried out at the formulations shown in table 1.

TABLE 1 indoor activity measurement of the active component A compounded with component (B) against wheat fusarium graminearum.

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A | 0.0100 | 100.00 | / | / |
| tebuconazole | 0.0600 | 16.67 | / | / |
| metconazole | 0.0300 | 33.33 | / | / |
| phenamacril | 0.4000 | 2.50 | / | / |
| prochloraz | 0.0200 | 50.00 | / | / |
| validamycin | 12.9915 | 0.08 | / | / |
| pyraclostrobin | 2.0000 | 0.50 | / | / |
| prothioconazole | 4.00 | 0.25 | / | / |
| ciproconazole | 2.00 | 0.50 | / | / |
| component A: tebuconazole =1:2 | 0.0136 | 73.53 | 44.44 | 165.44 |
| component A: tebuconazole =1:1 | 0.0105 | 95.24 | 58.33 | 163.27 |
| component A: tebuconazole =2:1 | 0.0115 | 86.96 | 72.22 | 120.40 |
| component A: metconazole =1:2 | 0.0141 | 70.92 | 55.56 | 127.66 |
| component A: metconazole =1:1 | 0.0094 | 106.38 | 66.67 | 159.57 |
| component A: metconazole =2:1 | 0.0086 | 116.28 | 77.78 | 149.50 |
| component A: metconazole =5:1 | 0.0077 | 129.87 | 88.89 | 146.10 |
| component A: phenamacril =1:10 | 0.0389 | 25.71 | 11.36 | 226.22 |
| component A: phenamacril =1:5 | 0.0234 | 42.74 | 18.75 | 227.92 |
| component A: phenamacril =1:2 | 0.0165 | 60.61 | 35.00 | 173.16 |
| component A: phenamacril =1:1 | 0.0132 | 75.76 | 51.25 | 147.82 |
| component A: phenamacril =2:1 | 0.0091 | 109.89 | 67.50 | 162.80 |
| component A: phenamacril =5:1 | 0.0082 | 121.95 | 83.75 | 145.61 |
| component A: Prochloraz =1:1 | 0.0097 | 103.09 | 75.00 | 137.46 |
| component A: Prochloraz =2:1 | 0.0068 | 147.06 | 83.33 | 176.47 |
| component A: Prochloraz =5:1 | 0.0079 | 126.58 | 91.67 | 138.09 |

(continued)

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A: Validamycin =1:100 | 0.5356 | 1.87 | 1.07 | 175.10 |
| component A: Validamycin =1:50 | 0.3516 | 2.84 | 2.04 | 139.68 |
| component A: Validamycin =1:25 | 0.2043 | 4.89 | 3.92 | 124.86 |
| component A: Validamycin =1:5 | 0.0463 | 21.60 | 16.73 | 129.09 |
| component A: pyraclostrobin =1:100 | 0.4536 | 2.20 | 1.49 | 148.44 |
| component A: pyraclostrobin =1:50 | 0.2029 | 4.93 | 2.45 | 201.08 |
| component A: pyraclostrobin =1:25 | 0.1778 | 5.62 | 4.33 | 129.98 |
| component A: pyraclostrobin =1:5 | 0.0410 | 24.39 | 17.08 | 142.77 |
| component A:prothioconazole=1:100 | 0.3199 | 3.13 | 1.24 | 252.58 |
| component A:prothioconazole=1:50 | 0.2211 | 4.52 | 2.21 | 205.04 |
| component A:prothioconazole=1:25 | 0.1531 | 6.53 | 4.09 | 159.83 |
| component A:Ciproconazole=1:100 | 0.4719 | 2.12 | 1.49 | 142.69 |
| component A:Ciproconazole=1:50 | 0.1958 | 5.11 | 2.45 | 208.38 |
| component A:Ciproconazole=1:25 | 0.1563 | 6.40 | 4.33 | 147.86 |
| component A:Ciproconazole=1:5 | 0.0429 | 23.31 | 17.08 | 136.45 |

TABLE 2 indoor activity measurement of the active component A compounded with component (B) against rape sclerotinia sclerotiorum.

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A | 0.01 | 100 | / | / |
| tebuconazole | 0.1 | 10.00 | / | / |
| fludioxonil | 0.015 | 66.67 | / | / |
| chlorothalonil | 0.82 | 1.22 | / | / |
| Prochloraz | 0.08 | 12.5 | / | / |
| component A:tebuconazole=1:5 | 0.0313 | 31.95 | 25.00 | 127.80 |
| component A:tebuconazole=1:2 | 0.0130 | 76.92 | 40.00 | 192.31 |
| component A:tebuconazole=1:1 | 0.0097 | 103.09 | 55.00 | 187.44 |
| component A:tebuconazole=2:1 | 0.0109 | 91.74 | 70.00 | 131.06 |
| component A:tebuconazole=5:1 | 0.0097 | 103.09 | 85.00 | 121.29 |
| component A:fludioxonil=1:2 | 0.0074 | 135.14 | 77.78 | 173.75 |
| component A:fludioxonil=1:1 | 0.0094 | 106.38 | 83.33 | 127.66 |
| component A:fludioxonil=2:1 | 0.0093 | 107.53 | 88.89 | 120.97 |
| component A:fludioxonil=5:1 | 0.0060 | 166.67 | 94.44 | 176.47 |
| component A:chlorothalonil=1:10 | 0.0753 | 13.28 | 10.20 | 130.20 |
| component A:chlorothalonil=1:5 | 0.0323 | 30.96 | 17.68 | 175.08 |

(continued)

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A:chlorothalonil=1:2 | 0.0203 | 49.26 | 34.15 | 144.26 |
| component A:chlorothalonil=1:1 | 0.0158 | 63.29 | 50.61 | 125.06 |
| component A:chlorothalonil=2:1 | 0.0096 | 104.17 | 67.07 | 155.30 |
| component A:chlorothalonil=5:1 | 0.0078 | 128.21 | 83.54 | 153.47 |
| component A:Prochloraz=1:5 | 0.0178 | 56.18 | 27.08 | 207.43 |
| component A:Prochloraz=1:1 | 0.0149 | 67.11 | 41.67 | 161.07 |
| component A:Prochloraz=2:1 | 0.0124 | 80.65 | 56.25 | 143.37 |
| component A:Prochloraz=5:1 | 0.0091 | 109.89 | 70.83 | 155.14 |

Test example 2: example of potted growth

The test object was *Blumeria graminis.* Preparing the original medicament into the required test medicament, and adopting a pot culture method for the test. Firstly, 5 different concentration gradients are set for a single agent and each mixed agent (the control effect is set according to the geometric progression in the range of 5%-90%). Firstly, selecting wheat seeds with full seeds, soaking the seeds in clear water for 40-60 min, and then uniformly dibbling the seeds in a nutrient medium filled with sandy loam. Uniformly spreading soil covering matrix on the surface of 20-25 seeds in each pot to completely cover the seeds, watering thoroughly at the root zone, and preserving heat and moisture for later use until the growth period reaches 2-3 leaves. When the protection effect of the pesticide is measured, the pesticide is firstly sprayed, the agent is respectively sprayed on the leaf surfaces of healthy wheat seedlings when 2 leaves are grown, the medicament contrast and the clear water contrast are set, after 24 hours, wheat powdery mildew is inoculated by adopting a shake-off method, after 7 days of inoculation, when white lesions appear on the clear water contrast leaves, the disease condition index of each treated leaf is respectively investigated, and the average value of 3 times of repetition is used as statistical data. The disease index of the wheat leaves is calculated by investigating the disease conditions of the wheat leaves, so that the control effect on the wheat powdery mildew is obtained. The classification criteria were as follows:

stage 0: no lesion spots;
stage 1: the lesion area accounts for less than 5% of the whole leaf area;
stage 3: the ratio of the lesion spot area to the whole leaf area is more than 5% to less than 10%;
stage 5: the ratio of the lesion spot area to the whole leaf area is more than 11% to less than 25%;
stage 7: the ratio of the lesion spot area to the whole leaf area is more than 26% to less than 50%;
stage 9: the ratio of the lesion spot area to the whole leaf area is more than 50%;

$$\text{Disease Index} = \frac{\sum(\text{Number of diseased plants at each level} \times \text{Representative value of that level})}{\text{Total number of leaves surveyed} \times \text{Highest level value}} \times 100\%$$

$$\text{Control Efficacy} = \frac{\text{Control Disease Index} - \text{Treatment Disease Index}}{\text{Control Disease Index}} \times 100\%$$

The $EC_{50}$ value of each medicament is obtained through the linear regression analysis between the control efficacy rate value and the logarithm value of the series concentration, and the co-toxicity coefficient (CTC) of the mixed medicament is calculated by the Sun Yunpei method, thereby evaluating the activity of the test medicament on germs. The co-toxicity coefficient (CTC) of a compound formulation can be interpreted as follows: $CTC \leq 80$ indicates an antagonistic effect, $80 < CTC < 120$ indicates an additive effect, $120 \leq CTC < 200$ indicates a synergistic effect, $CTC \geq 200$ indicates a significantly synergistic effect.

$$\text{Toxicity Index(TI)} = \text{Standard Fungicide } EC_{50} / \text{Single Agent } EC_{50} \times 100$$

Measured Toxicity Index of Mixture（ATI）= Standard Fungicide $EC_{50}$ / Mixture $EC_{50}\times100$

Theoretical Toxicity Index of Mixture(TTI)=Toxicity Index of Agent A×Content of Agent A in the Mixture (%) + Toxicity Index of Agent B × Content of Agent B in the Mixture (%)

Co-toxicity Coefficient of Mixture (CTC) = Measured Toxicity Index of Mixture / Theoretical Toxicity Index of Mixture ×100

The standard fungicide in the formula refers to the active component A.

The experiments were carried out at the formulation shown in table 3.

TABLE 3 indoor Activity measurement of the active component A compounded with component (B) against wheat powdery mildew

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A | 16.0000 | 100.00 | / | / |
| propiconazole | 11.0000 | 145.45 | / | / |
| tebuconazole | 13.0000 | 123.08 | / | / |
| pyraclostrobin | 12.0000 | 133.33 | / | / |
| prothioconazole | 14.0000 | 114.29 | / | / |
| fluazolidinamide | 20.0000 | 80.00 | / | / |
| ciproconazole | 17.0000 | 94.12 | / | / |
| component A:propiconazole=1:50 | 5.3080 | 301.43 | 2.02 | 149.38 |
| component A:propiconazole=1:25 | 2.8411 | 563.16 | 4.07 | 138.37 |
| component A:propiconazole=1:5 | 0.4444 | 3600.36 | 21.52 | 167.34 |
| component A:propiconazole=1:1 | 0.0756 | 21164.02 | 122.73 | 172.45 |
| component A:propiconazole=5:1 | 0.3991 | 4009.02 | 27.58 | 145.38 |
| component A:propiconazole=25:1 | 2.2135 | 722.84 | 5.75 | 125.75 |
| component A:propiconazole=50:1 | 3.1773 | 503.57 | 2.89 | 174.17 |
| component A:tebuconazole=1:50 | 4.0170 | 398.31 | 2.01 | 198.26 |
| component A:tebuconazole=1:25 | 2.7272 | 586.68 | 4.04 | 145.38 |
| component A:tebuconazole=1:5 | 0.4661 | 3432.74 | 20.77 | 165.28 |
| component A:tebuconazole=1:1 | 0.0629 | 25437.20 | 111.54 | 228.06 |
| component A:tebuconazole=5:1 | 0.3529 | 4533.86 | 23.85 | 190.13 |
| component A:tebuconazole=25:1 | 2.3110 | 692.34 | 4.89 | 141.65 |
| component A:tebuconazole=50:1 | 4.5585 | 350.99 | 2.45 | 143.12 |
| component A:pyraclostrobin=1:50 | 4.6983 | 340.55 | 2.01 | 169.17 |
| component A:pyraclostrobin=1:25 | 1.9199 | 833.38 | 4.05 | 205.71 |
| component A:pyraclostrobin=1:5 | 0.5110 | 3131.12 | 21.11 | 148.32 |
| component A:pyraclostrobin=1:1 | 0.0548 | 29197.08 | 116.67 | 250.26 |
| component A:pyraclostrobin=5:1 | 0.3568 | 4484.30 | 25.56 | 175.47 |
| component A:prothioconazole=1:50 | 5.1734 | 309.27 | 2.01 | 154.21 |
| component A:prothioconazole=1:25 | 2.3377 | 684.43 | 4.02 | 170.17 |

(continued)

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A:prothioconazole=1:5 | 0.4766 | 3357.11 | 20.48 | 163.95 |
| component A:prothioconazole=1:1 | 0.0655 | 24427.48 | 107.14 | 227.99 |
| component A:prothioconazole=5:1 | 0.2515 | 6361.83 | 22.38 | 284.25 |
| component A:prothioconazole=25:1 | 2.2200 | 720.72 | 4.55 | 158.42 |
| component A:prothioconazole=50:1 | 4.2528 | 376.22 | 2.28 | 165.00 |
| component A:fluazolidinamide=1:50 | 4.2732 | 374.43 | 1.99 | 187.95 |
| component A:fluazolidinamide=1:25 | 2.8599 | 559.46 | 3.97 | 140.95 |
| component A:fluazolidinamide=1:5 | 0.7689 | 2080.89 | 19.33 | 107.63 |
| component A:fluazolidinamide=1:1 | 0.1359 | 11773.36 | 90.00 | 130.82 |
| component A:fluazolidinamide=5:1 | 0.4222 | 3789.67 | 16.67 | 227.38 |
| component A:fluazolidinamide=25:1 | 2.1502 | 744.12 | 3.23 | 230.32 |
| component A:fluazolidinamide=50:1 | 4.5080 | 354.92 | 1.61 | 220.75 |
| component A:ciproconazole=1:50 | 3.6424 | 439.27 | 2.00 | 219.89 |
| component A:ciproconazole=1:25 | 2.2044 | 725.82 | 3.99 | 181.87 |
| component A:ciproconazole=1:5 | 0.3971 | 4029.21 | 19.80 | 203.46 |
| component A:ciproconazole=1:1 | 0.1059 | 15108.59 | 97.06 | 155.66 |
| component A:ciproconazole=5:1 | 0.3876 | 4127.97 | 19.02 | 217.04 |
| component A:ciproconazole=25:1 | 1.9735 | 810.74 | 3.77 | 214.84 |
| component A:ciproconazole=50:1 | 3.9774 | 402.27 | 1.88 | 213.45 |

Test example 3

The test subject was wheat rust(*Puccinia striiformis f. sp. tritici*). Preparing the original medicine into the required test medicament, and adopting a pot culture method for the test. Firstly, 5 different concentration gradients are set for a single agent and each mixed agent (the control effect is set according to the geometric progression in the range of 5%-90%). Firstly, selecting wheat seeds with full seeds, soaking the seeds in clear water for 40-60 min, and then uniformly dibbling the seeds in a nutrient medium filled with sandy loam. Uniformly spreading soil covering matrix on the surface of 20-25 seeds in each pot to completely cover the seeds, watering thoroughly at the root zone, and preserving heat and moisture for later use until the growth period reaches 2-3 leaves. When the protection effect of the agent is measured, the agent is firstly sprayed, the agent is respectively sprayed on the leaf surfaces of healthy wheat seedlings when 2 leaves are grown, the medicament contrast and the clear water contrast are set, after 24 hours, wheat rust spores are inoculated, after 24 hours of dark moisturizing culture, normal illumination moisturizing culture is carried out after the wheat seedlings are transplanted, after 7 days of inoculation, when yellow spore piles appear on the clear water contrast leaves, the disease index of each treated leaf is respectively investigated, and the average value of 3 times of repetition is used as statistical data. The disease index of the wheat leaves is calculated by investigating the disease conditions of the wheat leaves, so that the control effect on the wheat rust is obtained. The classification criteria were as follows:

stage 0: no lesion spots;
stage 1: the lesion area accounts for less than 5% of the whole leaf area;
stage 3: the ratio of the lesion spot area to the whole leaf area is more than 5% to less than 10%;
stage 5: the ratio of the lesion spot area to the whole leaf area is more than 11% to less than 25%;

stage 7: the ratio of the lesion spot area to the whole leaf area is more than 26% to less than 50%;
stage 9: the ratio of the lesion spot area to the whole leaf area is more than 50%;

$$\text{Disease Index} = \frac{\sum(\text{Number of diseased plants at each level} \times \text{Representative value of that level})}{\text{Total number of leaves surveyed} \times \text{Highest level value}} \times 100\%$$

$$\text{Control Efficacy} = \frac{\text{Control Disease Index} - \text{Treatment Disease Index}}{\text{Control Disease Index}} \times 100\%$$

The $EC_{50}$ value of each medicament is obtained through the linear regression analysis between the control efficacy rate value and the logarithm value of the series concentration, and the co-toxicity coefficient (CTC) of the mixed medicament is calculated by the Sun Yunpei method, thereby evaluating the activity of the test medicament on germs. The co-toxicity coefficient (CTC) of a compound formulation can be interpreted as follows: $CTC \leq 80$ indicates an antagonistic effect, $80 < CTC < 120$ indicates an additive effect, $120 \leq CTC < 200$ indicates a synergistic effect, $CTC \geq 200$ indicates a significantly synergistic effect.

$$\text{Toxicity Index(TI)} = \text{Standard Fungicide } EC_{50} / \text{Single Agent } EC_{50} \times 100$$

$$\text{Measured Toxicity Index of Mixture (ATI)} = \text{Standard Fungicide } EC_{50} / \text{Mixture } EC_{50} \times 100$$

Theoretical Toxicity Index of Mixture (TTI) =Toxicity Index of Agent A × Content of Agent A --> in the Mixture (%) + Toxicity Index of Agent B × Content of Agent B in the Mixture (%)

Co-toxicity Coefficient of Mixture (CTC) = Measured Toxicity Index of Mixture / Theoretical Toxicity Index of Mixture ×100

The standard fungicide in the formula refers to the active component A.
The experiments were carried out at the formulation shown in table 4.

TABLE 4 indoor Activity measurement of the active component A compounded with component (B) against wheat Rust

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A | 29.0000 | 100.00 | / | / |
| propiconazole | 15.0000 | 193.33 | / | / |
| tebuconazole | 16.0000 | 181.25 | / | / |
| pyraclostrobin | 12.0000 | 241.67 | / | / |
| prothioconazole | 9.0000 | 322.22 | / | / |
| fluazolidinamide | 25.0000 | 116.00 | / | / |
| ciproconazole | 13.0000 | 233.08 | / | / |
| component A:propiconazole=1:50 | 10.7902 | 268.76 | 2.04 | 131.97 |
| component A:propiconazole=1:25 | 4.7233 | 613.98 | 4.14 | 148.18 |
| component A:propiconazole=1:5 | 0.9084 | 3192.43 | 23.11 | 138.13 |
| component A:propiconazole=1:1 | 0.1004 | 28884.46 | 146.67 | 196.94 |
| component A:propiconazole=5:1 | 0.4763 | 6088.60 | 35.56 | 171.24 |
| component A:propiconazole=25:1 | 2.8874 | 1004.36 | 7.59 | 132.33 |
| component A:propiconazole=50:1 | 5.6374 | 514.42 | 3.83 | 134.31 |

(continued)

| Name and Mixing Ratio | $EC_{50}$ | Measured Toxicity Index of Mixture (ATI) | Theoretical Toxicity Index of Mixture (TTI) | Co-toxicity Coefficient of Mixture (CTC) |
|---|---|---|---|---|
| component A:tebuconazole=1:50 | 7.7983 | 371.88 | 2.03 | 183.02 |
| component A:tebuconazole=1:25 | 5.1773 | 560.14 | 4.12 | 135.79 |
| component A:tebuconazole=1:5 | 0.6847 | 4235.43 | 22.71 | 186.51 |
| component A:tebuconazole=1:1 | 0.0978 | 29652.35 | 140.62 | 210.86 |
| component A:tebuconazole=5:1 | 0.4274 | 6785.21 | 33.54 | 202.29 |
| component A:tebuconazole=25:1 | 2.8874 | 1004.36 | 7.12 | 140.96 |
| component A:tebuconazole=50:1 | 5.0464 | 574.67 | 3.59 | 159.93 |
| component A:pyraclostrobin=1:50 | 7.7983 | 371.88 | 2.06 | 180.91 |
| component A:pyraclostrobin=1:25 | 4.2159 | 687.87 | 4.22 | 163.08 |
| component A:pyraclostrobin=1:5 | 0.5996 | 4836.56 | 24.72 | 195.64 |
| component A:pyraclostrobin=1:1 | 0.1278 | 22691.71 | 170.83 | 132.83 |
| component A:pyraclostrobin=5:1 | 0.4240 | 6839.62 | 43.61 | 156.83 |
| component A:prothioconazole=1:50 | 7.3520 | 394.45 | 2.09 | 188.99 |
| component A:prothioconazole=1:25 | 5.0443 | 574.91 | 4.34 | 132.41 |
| component A:prothioconazole=1:5 | 0.7682 | 3775.06 | 27.41 | 137.74 |
| component A:prothioconazole=1:1 | 0.0890 | 32584.27 | 211.11 | 154.35 |
| component A:prothioconazole=5:1 | 0.3205 | 9048.36 | 57.04 | 158.64 |
| component A:fluazolidinamide=1:50 | 7.8180 | 370.94 | 2.01 | 184.89 |
| component A:fluazolidinamide=1:25 | 3.6370 | 797.36 | 4.02 | 198.12 |
| component A:fluazolidinamide=1:5 | 1.1055 | 2623.25 | 20.53 | 127.76 |
| component A:fluazolidinamide=1:1 | 0.1356 | 21386.43 | 108.00 | 198.02 |
| component A:fluazolidinamide=5:1 | 0.5811 | 4990.54 | 22.67 | 220.17 |
| component A:fluazolidinamide=25:1 | 4.2106 | 688.74 | 4.62 | 149.23 |
| component A:fluazolidinamide=50:1 | 7.2270 | 401.27 | 2.31 | 173.43 |
| component A:ciproconazole=1:50 | 10.9202 | 265.56 | 2.05 | 129.65 |
| component A:ciproconazole=1:25 | 4.7368 | 612.23 | 4.19 | 146.14 |
| component A:ciproconazole=1:5 | 0.7548 | 3842.08 | 24.10 | 159.41 |
| component A:ciproconazole=1:1 | 0.1453 | 19958.71 | 161.54 | 123.55 |
| component A:ciproconazole=5:1 | 0.4495 | 6451.61 | 40.51 | 159.25 |
| component A:ciproconazole=25:1 | 2.7328 | 1061.18 | 8.73 | 121.50 |
| component A:ciproconazole=50:1 | 4.7940 | 604.92 | 4.41 | 137.07 |

Experiments show that the active component A has excellent fungicidal activity on wheat scab germ, sclerotinia sclerotiorum, wheat powdery mildew and wheat rust after being compounded with other fungicides, and has obvious synergistic effect.

Specifically, the co-toxicity coefficient of the active component A to the wheat scab germ can reach 252.58 at the

highest after being matched with other fungicides; the co-toxicity coefficient to the Sclerotinia sclerotiorum can reach 207.43 at most; the co-toxicity coefficient to the wheat powdery mildew can reach 284.25 at most; the co-toxicity coefficient to the wheat rust can reach 220.17 at most, and the obvious synergistic effect can be achieved.

Test example 4

Field efficacy test for preventing and treating cucumber powdery mildew.

The test object is cucumber powdery mildew. The test is carried out on Xiaoying village of Liuhe district of Nanjing city, Jiangsu Province, China, the field trend of the test is flat, the soil is loam, the fertility is medium, the pH value is 6.8, and the management of rich water during the test is medium. And setting blank contrast, repeating the treatment for 3 times, wherein each cell has 30 square meters and is arranged in random block groups. The water consumption per acre is 40L by adopting a conventional spraying method, and the water is uniformly sprayed on the front and back surfaces of the leaves.

The investigation and statistical method comprises the steps of investigating the base of illness state before application of the medicament, and investigating once again 10-14 days after the last application of the medicament, wherein 2 times of investigation are total. Four points are randomly taken from each cell, 2 plants are investigated from each point, all leaves are investigated from each plant, and each leaf is graded and recorded according to the percentage of lesion spots to the leaf area. The grading method comprises the following steps:

stage 0: no lesion spots;
stage 1: the lesion area accounts for less than 5% of the whole leaf area;
stage 3: the ratio of the lesion spot area to the whole leaf area is more than 6% to less than 10%;
stage 5: the ratio of the lesion spot area to the whole leaf area is more than 11% to less than 25%;
stage 7: the ratio of the lesion spot area to the whole leaf area is more than 26% to less than 50%;
stage 9: the ratio of the lesion spot area to the whole leaf area is more than 50%;

Disease Index = [Σ(Number of diseased leaves at each level × Relative level value) / (Total number of leaves surveyed × 9)] × 100.

Control Efficacy(%) = [1 - (Disease Index of Control before Application × Disease Index of Treatment after Application) / (Disease Index of Control after Application × Disease Index of Treatment before Application)] × 100.

When the fungicidal activity of the active compound combination exceeds the sum of the activities of the active compounds when applied individually, then there is always a synergistic effect of the fungicides. The expected activity of a given combination of two active compounds can be calculated (according to the Colby formula) as follows (refer to S.R.Colby, " Calculation of the synergistic andantagonistic responses of herbicide combinations ", Weeds 1967, 15, pages 20-22):

$$Cexp=X+Y-(XY/100)$$

X is the efficacy of component A when applied at an application rate of m g a.i./ha,
Y is the efficacy of component B when applied at an application rate of n g a.i./ha,
Cexp is the expected efficacy when the active compound A is administered at an application rate of m g a.i./ha and the active compound B is administered at an application rate of n g a.i./ha, respectively,
the degree of efficacy is expressed as %: 0% means the efficacy corresponding to the control group, while 100% efficacy means no disease observed.
C= Cobs/Cexp, C >1 indicates synergy and antagonism if C < 1.

TABLE 5 Field test results for controlling cucumber powdery mildew

| Experimental medicament | Dosage (g a,i./ha) | Cobs | Cexp | c |
|---|---|---|---|---|
| | | Actual control Effect /% | Expected control effect /% | Synergistic ratio |
| Example 2<br>component A: azoxystrobin=13:9 | component A 104<br>azoxystrobin 72 | 93.93 | 77.47 | 1.21 |

(continued)

| Experimental medicament | Dosage (g a,i./ha) | Cobs | Cexp | c |
|---|---|---|---|---|
| | | Actual control Effect /% | Expected control effect /% | Synergistic ratio |
| Example 3<br>component A: fludioxonil=3:1 | component A 150<br>fludioxonil 50 | 92.92 | 83.13 | 1.12 |
| Example 4<br>component A: pyraclostrobin=1:4 | component A 40<br>pyraclostrobin160 | 93.68 | 83.07 | 1.13 |
| Example 5<br>component A: difenoconazole=3:5 | component A 60<br>difenoconazole100 | 94.97 | 82.92 | 1.15 |
| component A | 104 | 54.68 | | |
| component A | 150 | 67.74 | | |
| component A | 40 | 37.60 | | |
| component A | 60 | 46.88 | | |
| azoxystrobin | 72 | 50.28 | | |
| fludioxonil | 50 | 47.70 | | |
| pyraclostrobin | 160 | 72.87 | | |
| difenoconazole | 100 | 67.85 | | |

The results of field tests show that in preparation examples 2, 3, 4 and 5, after the component A is compounded with azoxystrobin, fludioxonil, pyraclostrobin and difenoconazole, the synergy ratio C is more than 1, and the synergy is obvious.

In addition, the active component A, the phenamacril, the active component A prochloraz and the active component A fludioxonil have excellent fungicidal activity on rice bakanae disease and obvious synergistic effect.

The active component A and tricyclazole, the active component A and isoprothiolane, the active component A and azoxystrobin, and the active component A and prochloraz are excellent in fungicidal activity against rice blast germs and have obvious synergistic effect.

The active component A and tebuconazole, the active component A and prochloraz, the active component A and propiconazole, the active component A and validamycin, and the active component A and azoxystrobin have excellent fungicidal activity against ustilaginoidea virens and have obvious synergistic effect.

The active component A and azoxystrobin, the active component A and pyrimethanil, and the active component A and fludioxonil have excellent fungicidal activity against Botrytis cinerea and have obvious synergistic effect.

The active component A and the azoxystrobin have excellent fungicidal activity against soybean leaf spot pathogens and have obvious synergistic effect.

The active component A and the difenoconazole as well as the active component A and the tebuconazole have excellent fungicidal activity on the peanut leaf spot germs and have obvious synergistic effect.

In addition, the 24% seed treatment suspending agent provided in example 1 of the invention has the effects of enhancing the seed vigor and promoting the full and strong seedlings in the prevention and treatment of rice bakanae disease and wheat stem rot. It can directly kill germs carried by seeds or prevent the infection of soil-borne diseases, and improve the rate of emergence and the rate of seedling.

The preferred embodiments of the invention have been described above in detail, but the invention is not limited thereto. Within the scope of the technical idea of the invention, many simple modifications can be made to the technical solution of the invention, including various technical features being combined in any other suitable way, and these simple modifications and combinations should also be regarded as the disclosure of the invention, and all fall within the scope of the invention.

## Claims

1. A composition for killing fungi, which comprises a synergistically effective amount of active component A and active component B; the active component A is a dendrene amide compound with a structure shown in formula (I),

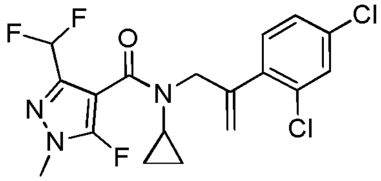

formula (I),

the active component B is selected from at least one compound of group a, group b, group c, group d, group e and group f;
the group a is an azole compound;
the group b is an amide compound;
the group c is a heterocyclic compound;
the group d is a carbamate compound;
the group e is a methoxy acrylate compound;
the group f contains at least one of guanidine compounds, nitrobenzene derivatives, organometallic compounds, sulfur-containing heterocyclic compounds, organophosphorus compounds, organochlorine compounds, inorganic active substances and antibacterial active compounds;
the antibacterial active compound is selected from at least one of validamycin, bronopol, cyflufenamid, cymoxanil, diphenylamine, metrafenone, mildiomycin, oxine-copper, prohexadione-calcium, spiroxamine, fludioxonil, tolylfluanid, ethylicin, cumic acid, cuminaldehyde, osthole, eugenol, physcion, sanguinarine chloride, carabrone and rosmarinic acid.

**2.** The composition according to claim 1, wherein the group a contains at least one compound selected from Ciproconazole, difenoconazole, azaconazole, bitertanol, bromuconazole, cyproconazole, difenoconazole, diniconazole, diniconazole-M, epoxiconazole, fenbuconazole, fluquinconazole, flusilazole, flutriafol, prochloraz, hexaconazole, imibenconazole, ipconazole, cyclopentazole, myclobutanil, oxpoconazole, paclobutrazole, penconazole, propiconazole, prothioconazole, simeconazole, tebuconazole, tetraconazole, triadimefon, triadimenol, triticonazole, uniconazole, cyazofamid, metconazole, imazalil, pefurazoate, prochloraz, triflumizol, benomyl, carbendazim, fuberidazole, thiabendazole, ethaboxam, etridiazole, hymexazole and thiabendazole, mefentrifluconazole, and / or

the group b contains at least one compound selected from Benalaxyl, benalaxyl-M, benodanil, boscalid, carboxin, fenfuram, fenhexamid, flutolanil, furametpyr, mepronil, metalaxyl, metalaxyl-M, ofurace, oxadixyl, (oxycarboxin) penthiopyrad sedaxane, tecloftalamm, thifluzamide, dimethomorph, flumorph, pyrimorph, flumetover, fluopicolide, fluopyram, fluazolidinamide, zoxamide, carpropamid, dicyclomet, mandiproamid, oxytetracyclin, silthiofarm, and / or
the group c contains at least one compound selected from Fluazinam, pvrifenox, bupirimate, cyprodinil, diflumetorim, fenarimol, ferimzone, mepanipyrim, nitrapyrin, nuarimol, pyrimethanil, triforine, fenpiclonil, fludioxonil, dodemorph, dodemorph-acetate, fenpropimorph, tridemorph, fenpropidin, fluoroimid, iprodione, procymidone, vinclozolin, famoxadone, fenamidone, octhilinone, probenazole, acibenzolar-S-methyl, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, and / or
the group d contains at least one compound selected from Ferbam, mancozeb, maneb, metam, methasulphocarb, metiram, propineb, thiram, zineb, ziram, benthiavalicarb, diethofencarb, iprovalicarb, propamocarb, Propamocarb hydrochloride, and / or
the group e contains at least one compound selected from azoxystrobin, pyraclostrobin, trifloxystrobin, fluoxastrobin, picoxystrobin, kresoxim-methyl, dimoxystrobin, metaminostrobin, orysastrobin, and / or
the group f contains at least one of guanidine compounds, cyanoacrylates, nitrobenzene derivatives, organometallic compounds, sulfur-containing heterocyclic compounds, organophosphorus compounds, organochlorine compounds, inorganic active substances and antibacterial active compounds, and / or
in the group f, the guanidine compounds is at least one selected from guanidine, dodine, dodine free base, iminoctadine, iminoctadine triacetate, iminoctadine acetate, iminoctadine triacetate and iminoctadine albesilate; the cyanoacrylates is selected from phenamacril; the nitrobenzene derivatives is selected from at least one of binapacryl, dinobuton, dinocap, nitrthal-isopropyl and tecnazen; the organometallic compounds is at least one selected from triphenyltin salt, triphenyltin acetate, triphenyltin chloride and triphenyltin hydroxide; the sulfur-containing heterocyclic compounds is selected from at least one of dithianon and isoprothiolane; the organophosphorus compounds is at least one selected from edifenphos, fosetyl, fosetyl-aluminum, iprobenfos, phosphorous acid, phosphite, pyrazophos and tolclofos-methyl; the organochlorine compounds is selected from at least one of chlorothalonil, cymoxanil, dichlorophen, flusulfamide, hexachlorobenzene, pencycuron, pentachlorphenole, pentachlorophenolate, phthalide, quintozene, thiophanate-methyl and tolylfluanid;
the inorganic active substances is at least one selected from bordeaux mixture, copper acetate, copper hydroxide, copper oxychloride and basic copper sulfate.

3. The composition according to claim 2, wherein the active component B is at least one compound selected from difenoconazole, propiconazole, azoxystrobin, kresoxim-methyl, pyraclostrobin, validamycin, metalaxyl-M, fludioxonil, prochloraz, triticonazole, triadimenol, diniconazole, metconazole, myclobutanil, tebuconazole, simeconazole, picoxystrobin, pefurazoate, fenamidone, fluoxastrobin, trifloxystrobin, triflumizol, thiabendazole, mefentrifluconazole, phenamacril, thifluzamide, cyazofamid, metalaxyl, dimethomorph, flutriafol, chlorothalonil, prothioconazole, ciproconazole, fluazolidinamide and procymidone.

4. The composition according to any one of claims 1 to 3, the content weight ratio of the active component A to the active component B is 1000: 1 to 1: 1000;

preferably, the content weight ratio of the active component A to the active component B is 100: 1 to 1: 100;
more preferably, the content weight ratio of the active component A to the active component B is 1:50 to 50: 1;
more preferably, the content weight ratio of the active component A to the active component B is 1:25 to 25: 1;
more preferably, the content weight ratio of the active component A to the active component B is 1:10 to 10: 1;
most preferably, the content weight ratio of the active component A to the active component B is 1:5 to 5: 1.

5. The composition according to any one of claims 1 to 4, wherein the composition further comprises an agriculturally acceptable carrier;
preferably, the carrier is at least one selected from the group consisting of clay, silicate, silica, resin, wax, solid fertilizer, water, alcohols, ketones, petroleum distillates, aromatic or waxy hydrocarbons, chlorinated hydrocarbons and liquefied gases.

6. A method of controlling diseases on useful plants or on propagation material thereof caused by phytopathogens, which comprises applying the composition according to any one of claims 1 to 5 to the useful plants, to the locus where the useful plants are grown or to propagation material of the useful plants.

7. The method according to claim 6, wherein the useful plant is selected from at least one of grape vines, cereal crops, sugar beet crops, fruit plants, legumes, oil plants, melon plants, fiber plants, vegetables and lauraceae.

8. The method according to claim 6 or 7, wherein the phytopathogen is selected from at least one of ascomycetes, basidiomycetes, deuteromycetes, and oomycetes.

9. A use of the composition of any one of claims 1 to 5 for the control of at least one of Brown spot of crops, Gray mold of crops, Anthracnose of crops, Fusarium wilt of crops and Powdery mildew of crops.

10. A use of the composition of any one of claims 1 to 5 for the control of at least one of Sclerotinia stem rot of rape, Fusarium head blight of wheat, Bakanae disease of rice, Powdery mildew of cucurbits, Powdery mildew of mango, Leaf spot of banana, Scab of banana, Early blight of potato, Late blight of potato, Downy mildew of cucumber, Leaf spot of peanut, Bacterial angular leaf spot of cucumber, Dollar spot of turfgrass, Powdery mildew of wheat, Wheat rust, and Gray mold of cucumber.

## INTERNATIONAL SEARCH REPORT

International application No.
**PCT/CN2023/115506**

**A. CLASSIFICATION OF SUBJECT MATTER**

A01N43/56(2006.01)i; A01P3/00(2006.01)i

According to International Patent Classification (IPC) or to both national classification and IPC

**B. FIELDS SEARCHED**

Minimum documentation searched (classification system followed by classification symbols)

IPC:A01N; A01P

Documentation searched other than minimum documentation to the extent that such documents are included in the fields searched

Electronic data base consulted during the international search (name of data base and, where practicable, search terms used)

CNTXT, WPABS, DWPI, CAPLUS (STN), REGISTRY (STN), CNKI: 江苏中旗科技股份有限公司, 杨光富, 魏阁, 张璞, 熊姿, 吴耀军, 姚凯诚, 烎烯, 酰胺, 杀菌, 真菌, 植物, fung?, phytopathogen? , dendrene, pyrazole, antifung?, bactericide?, amide, structural formula search

**C. DOCUMENTS CONSIDERED TO BE RELEVANT**

| Category* | Citation of document, with indication, where appropriate, of the relevant passages | Relevant to claim No. |
|---|---|---|
| Y | CN 109169678 A (QIAOCHANG MODERN AGRICULTURE CO., LTD.) 11 January 2019 (2019-01-11)<br>claims 2-9 and 16-17, and description, paragraphs [0035]-[0043] and [0055]-[0061] | 1-10 |
| Y | CN 113845480 A (JIANGSU FLAG CHEMICAL INDUSTRY CO., LTD.) 28 December 2021 (2021-12-28)<br>claims 5 and 7-10 | 1-10 |
| A | CN 101917858 A (ISHIHARA SANGYO KAISHA) 15 December 2010 (2010-12-15)<br>claims 1-11 | 1-10 |
| A | CN 109384722 A (CENTRAL CHINA NORMAL UNIVERSITY) 26 February 2019 (2019-02-26)<br>claims 1-10 | 1-10 |
| A | CN 109422691 A (CENTRAL CHINA NORMAL UNIVERSITY) 05 March 2019 (2019-03-05)<br>claims 1-10 | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **21 November 2023** | **27 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/115506**

| Patent document cited in search report | | | Publication date (day/month/year) | Patent family member(s) | | | Publication date (day/month/year) |
|---|---|---|---|---|---|---|---|
| CN | 109169678 | A | 11 January 2019 | None | | | |
| CN | 113845480 | A | 28 December 2021 | EP | 4223745 | A1 | 09 August 2023 |
| | | | | WO | 2022068816 | A1 | 07 April 2022 |
| CN | 101917858 | A | 15 December 2010 | NZ | 584754 | A | 29 June 2012 |
| | | | | ECSP | 10010157 | A | 29 June 2010 |
| | | | | BRPI | 0819222 | A2 | 07 October 2014 |
| | | | | BRPI | 0819222 | B1 | 21 March 2017 |
| | | | | HRP | 20171012 | T1 | 22 September 2017 |
| | | | | PL | 2205096 | T3 | 29 September 2017 |
| | | | | DK | 2205096 | T3 | 31 July 2017 |
| | | | | CR | 11408 | A | 28 June 2010 |
| | | | | CO | 6270288 | A2 | 20 April 2011 |
| | | | | AR | 069096 | A1 | 30 December 2009 |
| | | | | SI | 2205096 | T1 | 31 July 2017 |
| | | | | CA | 2702825 | A1 | 14 May 2009 |
| | | | | CA | 2702825 | C | 09 December 2014 |
| | | | | US | 2010255116 | A1 | 07 October 2010 |
| | | | | US | 8568755 | B2 | 29 October 2013 |
| | | | | WO | 2009060734 | A2 | 14 May 2009 |
| | | | | WO | 2009060734 | A3 | 23 December 2009 |
| | | | | AU | 2008325844 | A1 | 14 May 2009 |
| | | | | AU | 2008325844 | B2 | 16 May 2013 |
| | | | | UA | 99930 | C2 | 25 October 2012 |
| | | | | IL | 249101 | A0 | 31 January 2017 |
| | | | | IL | 249101 | B | 31 October 2018 |
| | | | | TW | 200934387 | A | 16 August 2009 |
| | | | | TWI | 434650 | B | 21 April 2014 |
| | | | | KR | 20100087706 | A | 05 August 2010 |
| | | | | KR | 101527245 | B1 | 08 June 2015 |
| | | | | ZA | 201002726 | B | 29 June 2011 |
| | | | | RU | 2010122898 | A | 20 December 2011 |
| | | | | RU | 2483541 | C2 | 10 June 2013 |
| | | | | CL | 2008003288 | A1 | 22 May 2009 |
| | | | | LT | 2205096 | T | 12 June 2017 |
| | | | | PT | 2205096 | T | 11 July 2017 |
| | | | | IL | 205476 | A0 | 30 December 2010 |
| | | | | IL | 205476 | B | 31 January 2019 |
| | | | | NZ | 599953 | A | 28 June 2013 |
| | | | | JP | 2009132681 | A | 18 June 2009 |
| | | | | JP | 5631540 | B2 | 26 November 2014 |
| | | | | HUE | 035218 | T2 | 02 May 2018 |
| | | | | MX | 2010005025 | A | 27 May 2010 |
| | | | | CY | 1119039 | T1 | 10 January 2018 |
| | | | | BR | 122017000361 | B1 | 17 October 2017 |
| | | | | ES | 2633288 | T3 | 20 September 2017 |
| | | | | EP | 2205096 | A2 | 14 July 2010 |
| | | | | EP | 2205096 | B1 | 12 April 2017 |
| | | | | UA | 110695 | C2 | 10 February 2016 |
| | | | | MA | 31802 | B1 | 01 October 2010 |
| | | | | CL | 2013000934 | A1 | 07 March 2014 |

Form PCT/ISA/210 (patent family annex) (July 2022)

**INTERNATIONAL SEARCH REPORT**
**Information on patent family members**

International application No.
**PCT/CN2023/115506**

| Patent document cited in search report | | | Publication date (day/month/year) | Patent family member(s) | | | Publication date (day/month/year) |
|---|---|---|---|---|---|---|---|
| | | | | RS | 56099 | B1 | 31 October 2017 |
| CN | 109384722 | A | 26 February 2019 | None | | | |
| CN | 109422691 | A | 05 March 2019 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211043394X
- CN 113845480 A


### Non-patent literature cited in the description


- **S.R.COLBY**. Calculation of the synergistic andantagonistic responses of herbicide combinations. *Weeds*, 1967, vol. 15, 20-22